# EUROPÄISCHE PATENTANMELDUNG

(11) **EP 2 394 773 A2**
(43) Veröffentlichungstag der Anmeldung: **14.12.2011**
(21) Anmeldenummer: 11168784.4
(22) Anmeldetag: 06.06.2011
(51) Int. Cl.: B23K 11/11, B23K 11/25

(54) **Sensorlagerung und Kalibriereinrichtung**

(30) Priorität: 09.06.2010 DE 202010005590 U
(71) Anmelder: KUKA Systems GmbH, 86165 Augsburg (DE)
(72) Erfinder: Dietrich, Simon, 86169 Augsburg (DE)
(74) Vertreter: Patentanwälte Funk & Böss GbR

(57) **Zusammenfassung**

Die Erfindung betrifft eine ausweichfähige Sensorlagerung (8) für einen Sensor(4), insbesondere einen Kalibriersensor für Schweißwerkzeuge, insbesondere elektrische Schweißzangen (52). Die Sensoranordnung (8) weist eine Parallelogrammführung (16) für den Sensor (4) auf.

## Beschreibung

Die Erfindung betrifft eine Sensorlagerung, insbesondere für eine Kalibriereinrichtung für elektrische Schweißzangen.

Für Schweißzangen gibt es verschiedene Kenngrößen, die in der Praxis mit unterschiedlichen Methoden zu unterschiedlichen Zeitpunkten mehr oder minder automatisiert sowie einzeln ermittelt werden. Ein anderer Teil der Kenngrößen wird aus Angaben des Zangenherstellers übernommen. Der TCP (Tool Center Point) der Schweißzange wird bei der Inbetriebnahme der Schweißausrüstung mit einer neuen Schweißzange mit neuen Elektrodenkappen ermittelt. Die in der Praxis eingesetzten Verfahren und Vorrichtungen beanspruchen relativ viel Zeit und sind ungenau. Hinzu kommt, dass die TCP-Lage sich während der Lebensdauer der Schweißzange ändert, weil z.B. die Elektrodenkappen verschleißen oder nachbearbeitet werden oder weil die anderen Teile der Schweißzange, z.B. die Lager, ebenfalls einem Verschleiß unterliegen. Auch mechanische Beschädigungen der Zangenarme führen zu Veränderungen.

Eine andere mechanische Kenngröße kann in der Stellung oder Position des Zangenantriebs bei geschlossener Zange mit Elektrodenkraft Null liegen. Die Ermittlung dieser Kenngröße ist ebenfalls zeitaufwändig und wird i.d.R. bei Inbetriebnahme der Schweißzange durchgeführt. Ferner ist es bekannt, einen an der Schweißzange oder an deren Zangenantrieb angebrachten Kraftsensor zu kalibrieren mittels einer Kraftmessung an einem referenzierten Kraftsensor.

Aus der WO 03/008145 A1 ist eine Kalibriereinrichtung mit einem Kraftsensor und einer einachsig beweglichen Sensorlagerung bekannt, auf dem die Schweißzange mit den beiden Elektroden geschlossen wird. Die Kalibriereinrichtung dient zum Kalibrieren von elektrischen Widerstandspunktschweißzangen hinsichtlich Druckkraft und Position bzw. Verschleiß der zuvor gefrästen Elektrodenkappenspitzen. Sie weist ein stationäres Gestell mit einer starren vertikalen Säule auf, an deren oberem Ende die als linearer, federbelasteter Schlitten ausgebildete Sensorlagerung mit dem Kraftsensor angeordnet ist. Die Kalibriereinrichtung und die Sensorlagerung bieten begrenzte Kalibriermöglichkeiten.

Es ist Aufgabe der vorliegenden Erfindung, eine verbesserte Sensorlagerung anzugeben.

Die Aufgabe de3r Erfindung wird gelöst durch eine ausweichfähige Sensorlagerung für einen Sensor, aufweisend eine Parallelogrammführung für den Sensor. Der Sensor ist insbesondere ein Kalibriersensor für Schweißwerkzeuge, insbesondere elektrische Schweißzangen.

Ein weitere Aspekt der Erfindung ist ein Kalibrierwerkzeug für Schweißwerkzeuge, insbesondere elektrische Schweißzangen, mit einem beweglichen Sensor, insbesondere einem Kraftsensor, wobei das Kalibrierwerkzeug eine nach mehreren Bewegungsachsen ausweichfähige Sensorlagerung für den Sensor, insbesondere eine erfindungsgemäße ausweichfähige Sensorlagerung für den Sensor aufweist.

Die erfindungsgemäße Sensorlagerung mit der Parallelogrammführung hat den Vorteil, dass der Sensor sich leichter, schneller und exakter bewegen lässt. Sein Gewicht kann auch leichter kompensiert werden. Der Sensor behält bei der Verlagerung in der Bewegungsachse der Sensorlagerung seine Ausrichtung. Lagerungsbedingte Einflüsse auf die Sensor-Messergebnisse werden minimiert.

Die Sensorlagerung kann eine oder mehrere weitere Bewegungsachsen aufweisen, die vorzugsweise direkt miteinander verkettet bzw. gekoppelt sind und sich auf engem Raum unterbringen lassen. Dies ist günstig zur Bildung eines Kalibrierwerkzeugs, welches wahlweise stationär oder instationär, insbesondere an einem mehrachsigen Manipulator bzw. einem Roboter, angeordnet werden kann. Ein solches Kalibrierwerkzeug bzw. eine solche Sensorlagerung haben einen relativ weiten Einsatzbereich.

Der Sensor kann dank der mehrachsigen Sensorlagerung im Raum und vorzugsweise in allen drei Raumachsen bewegt und unter Beibehaltung seiner Sensorausrichtung verlagert werden. Dies bietet erweiterte Mess- und Einsatzmöglichkeiten, insbesondere zu Kalibrierzwecken für Schweißwerkzeuge, insbesondere elektrische Schweißzangen.

Die Sensorlagerung kann eine Positionskontrolle aufweisen, die verschiedene Funktionen haben kann. Einerseits kann sie eine Messeinrichtung mit ein oder mehreren Messelementen beinhalten, mit denen die Sensorbewegungen nach Richtung und Größe erfasst werden können. Hierbei kann insbesondere in den verschiedenen Bewegungsachsen der Weg gemessen werden, den der Sensor beim Schließen einer elektrischen Widerstandspunktschweißzange zurücklegt. Hieraus können verschiedene Kenngrößen der Schweißzange oder eines anderen Schweißwerkzeugs schnell und genau ermittelt werden.

Die Positionskontrolle kann auch Kontrollelemente zum Detektieren der aktuellen Ausgangsposition oder Null-Stellung des Sensors bzw. der Sensorlagerung und ihrer Bewegungsachse(n) aufweisen. Mittels einer Rückstelleinrichtung können für die Bewegungsachse(n) definierte Ausgangsstellungen vorgegeben werden. Dies ist für die Mess- und Kalibriergenauigkeit ebenfalls von Vorteil.

Die erfindungsgemäße Sensorlagerung kann für unterschiedlichste Arten von Sensoren und verschiedenste Einsatzzwecke benutzt werden. Besondere Vorteile bestehen für das Kalibrieren von Schweißwerkzeugen, insbesondere elektrischen Schweißzangen mit Elektroden. Die Sensorlagerung bzw. das hiervon gebildete Kalibrierwerkzeug erlaubt nicht nur das Kalibrieren beweglich angeordneter, insbesondere robotergeführten Schweißzangen. Es können auch stationäre Schweißzangen kalibriert werden. Hierbei kann auch die funktionale und positionsmäßige Zuordnung von Schweißwerkzeug und Werkstück kalibriert werden. Dies schließt den Manipulator bzw. Roboter zum Führen der Schweißzange bzw. des Kalibrierwerkzeugs ein, dessen programmierte Bewegungsbahn entsprechend der Kalibrierergebnisse nachjustiert werden kann.

Die Kalibriereinrichtung und das Kalibrierverfahren haben den Vorteil einer hohen Genauigkeit in Verbindung mit einem geringen Zeitbedarf. Dies ermöglicht ein Kalibrieren der Schweißzange während des Schweißbetriebs in kurzen Abständen. Hierdurch kann gegebenenfalls sogar optimal auf evtl. Veränderungen der Schweißzange reagiert werden.

Die erfindungsgemäße Kalibrierung von Schweißwerkzeugen erlaubt außerdem eine Verbesserung und Absicherung der Prozessqualität für automatisierte und robotergestützte Schweißprozesse. Der Steuerung sind dadurch die wichtigsten Kenngrößen des Schweißwerkzeugs so genau wie möglich bekannt. Dies ermöglicht eine hohe Güte der Prozessregelung und eine relativ exakte Modellierung der Schweißzange in der Steuerung bzw. Regelung.

Die erfindungsgemäße Kalibriertechnik und die Sensorlagerung haben ferner den Vorteil, dass die gewünschten Kenngrößen der Schweißzange gemeinsam und während einer Schließbewegung der Schweißzange erfasst werden können. Die zur Erfassung eingesetzte Technologiesteuerung kann außerdem für die Steuerung und Regelung der Schweißprozesse selbst eingesetzt werden. Sie kann insbesondere in eine Manipulator- oder Robotersteuerung integriert oder zumindest mit dieser verbunden werden. Ggf. kann in einer Robotersteuerung auch ein Software-Modul zur softwaremäßigen Ausbildung der Technologiesteuerung implementiert werden.

Die bevorzugt eingesetzte mehrachsige Sensorlagerung hat den Vorteil einer hohen Mess- und Erfassungsgenauigkeit. Sie besitzt andererseits einen konstruktiv einfachen und wenig aufwändigen Aufbau. Aus verschiedenen messtechnisch erfassten Parametern können die benötigten Kenngrößen durch Auswertung und durch rechnerische Weiterverarbeitung ermittelt werden.

Die Kalibriertechnik ermöglicht insbesondere eine Erfassung der Zangenelastizitäten, was insbesondere für die Zangenarme getrennt erfolgen kann. Außer der Federwirkung der Zangenarme selbst kann auch ein etwaiges elastisches Ausweichen der Elektroden erfasst werden. Insbesondere schräg gestellte Elektroden können beim Schließen auf einem Werkstück seitlich auswandern. Durch die Erfassung solcher Versätze kann der Manipulator in neuer und besonders genauer Weise gesteuert werden, indem er eine entsprechende Kompensationsbewegung ausführen kann und hierfür auf der Basis der Kalibrierergebnisse programmiert ist.

Die Kalibriertechnik ermöglicht insbesondere einen vollautomatischen Ablauf und eine gleichzeitige schnelle und genaue Ermittlung der wichtigsten Kenngrößen von Schweißwerkzeugen, insbesondere elektrischen Schweißzangen bzw. Widerstandspunktschweißzangen. Durch die Automatisierung kann sich der Anwender zyklische Kalibrierungen ohne nennenswerte Zeitverluste leisten. Die Steuerung bzw. Regelung kann immer mit aktuellen Werten arbeiten, wobei bessere Steuer-und Regelergebnisse für die Elektrodenkraft und eine evtl. Kompensation von Zangenfehlstellungen erreicht werden können.

Durch die relativ genaue Modellierung der Schweißzange über die erfassten Kenngrößen kann auf einen mechanischen Zangenausgleich verzichtet werden. Dies reduziert das Gewicht der Schweißzange, was wiederum den Einsatz leichterer und dafür umso präziserer Manipulatoren bzw. Roboter erlaubt. Je präziser die Roboterführung ist, desto eher ist ein mechanischer Zangenausgleich entbehrlich.

Weitere Vorteile liegen in der Vermeidung von Eingabefehlern durch den automatischen Ablauf, wobei falsche Steuer- und Regelergebnisse der Vergangenheit angehören. Ein besonders wichtiger Vorteil besteht in der Erfassung der aktuellen Positionen der Elektrodenkappenspitze in räumlicher Hinsicht, insbesondere in den drei Raumrichtungen. Dies ermöglicht neben der vorerwähnten Kompensationsbewegung des Roboters auch das rechtzeitige Erkennen und Anzeigen einer evtl. Verformung, insbesondere Verbiegung der Schweißzange mittels einer Technologiesteuerung, was wiederum eine vorbeugende Instandhaltung der Schweißzange ermöglicht. Die Elastizitätserfassung der Zangenarme erlaubt der Technologiesteuerung das rechtzeitige Erkennen und Anzeigen von etwaigen sich bildenden Rissen in den Zangenarmaturen. Auch dies erlaubt eine vorbeugende Instandhaltung.

Die Kalibriereinrichtung kann mit zusätzlichen Einrichtungen, z.B. einer Kappenwechselvorrichtung oder einer Kappenfräsvorrichtung oder dgl., ergänzt werden. Auch ein Stromsensor zum Kalibrieren der Stromquelle eines elektrischen Schweißwerkzeugs ist von Vorteil.

Ein weiterer Aspekt der Erfindung betrifft eine Einrichtung zum Steuern einer manipulatorgeführten elektrischen Schweißzange mit Zangenarmen und Elektroden, wobei die Schweißzange kraftgeregelt, kalibrierfähig und mit einer Auswerteeinrichtung, insbesondere einer Technologiesteuerung, verbunden ist. Die Schweißzange kann ohne mechanischen Zangenausgleich ausgebildet sein.

Ein weiterer Aspekt der Erfindung betrifft einen Manipulator mit mehreren Bewegungsachsen zum Führen einer elektrischen Schweißzange mit Zangenarmen und Elektroden oder des erfindungsgemäßen Kalibrierwerkzeugs, wobei der mehrachsige Manipulator auf Kompensationsbewegungen zum Ausgleich der seitlichen Elektroden-Ausweichbewegungen programmiert ist.

In den abhängigen Ansprüchen sind weitere vorteilhafte Ausgestaltungen der Erfindung angegeben.

Ausführungsbeispiele der Erfindung sind exemplarisch in den beigefügten schematischen Figuren dargestellt. Es zeigen:
- Fig. 1: eine Schemadarstellung einer Kalibriereinrichtung für stationäre Schweißzangen,
- Fig. 2: eine Variante der Kalibriereinrichtung für mobile Schweißzangen,
- Fig. 3: eine aufgebrochene Seitenansicht einer mehrachsigen Sensorlagerung,
- Figur 4 - 6: Darstellungen einzelner Komponenten der Sensorlagerung,
- Fig. 7: eine Schemadarstellung einer Schweißzange und der Kalibriertechnik, und
- Figuren 8 und 9: eine Schweißzange unter verschiedenen Zangenschließkräften und den dabei auftretenden seitlichen Elektrodenversatz.

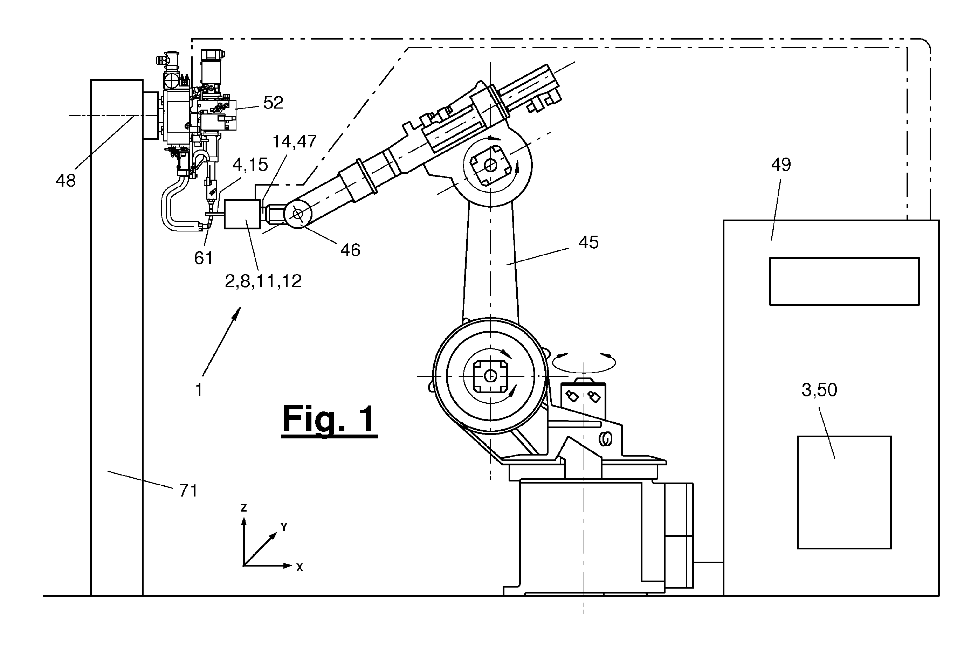

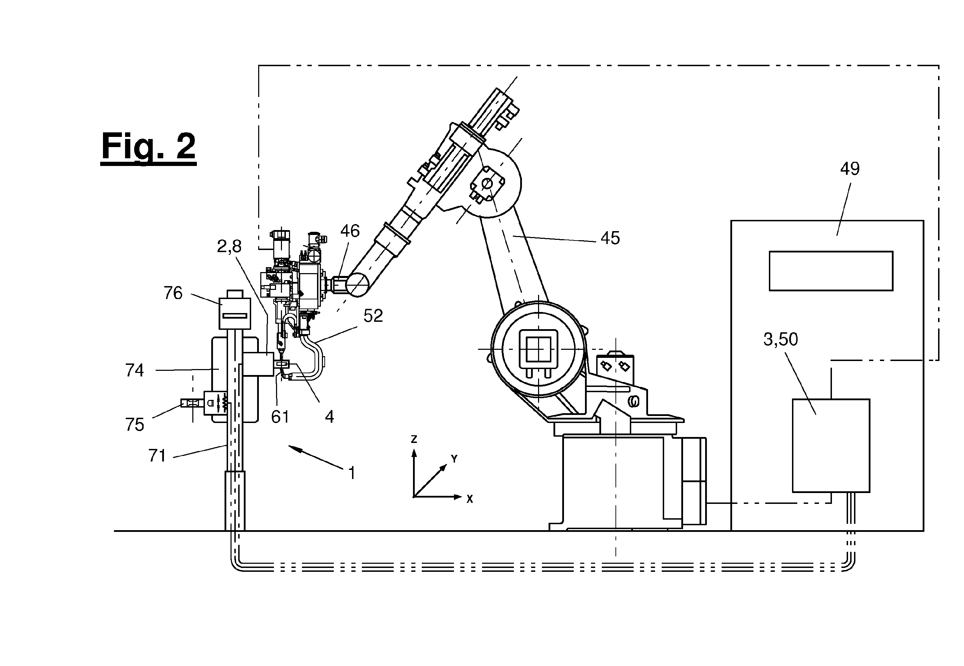

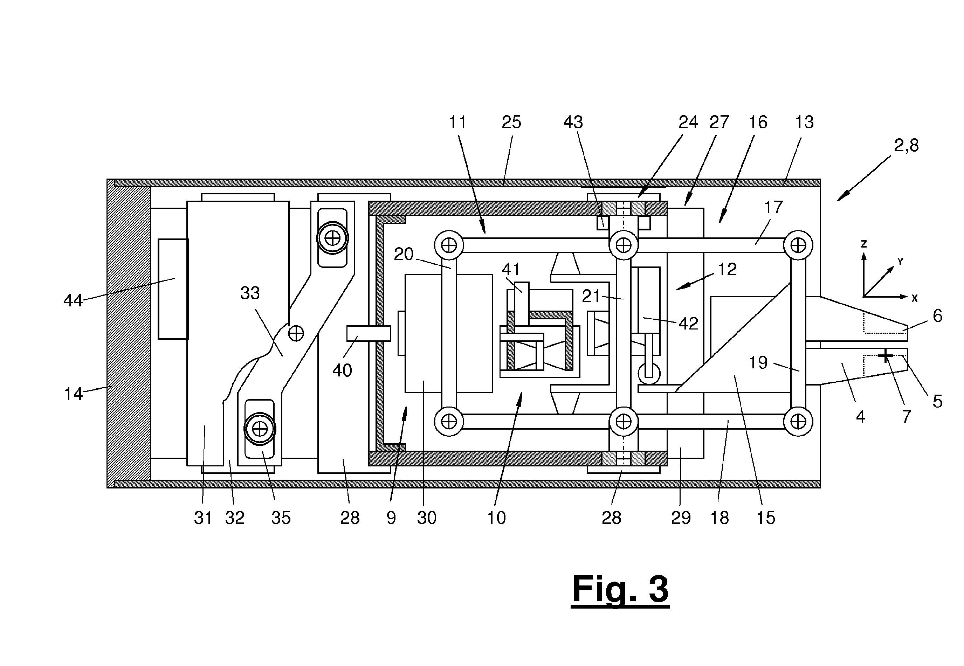

Die Figuren 1 und 2 zeigen eine Kalibriereinrichtung 1 und die Figuren 3 bis 6 zeigen eine Sensorlagerung 8 für einen Sensor 4, die eine oder mehrere, insbesondere zwei oder drei Bewegungsachsen aufweisen kann. Der Sensor 4 kann einfach oder mehrfach vorhanden sein. Es sind auch mehrere verschiedene Sensoren 4 möglich. Der Sensor 4 kann eine beliebige Art und Form aufweisen. Es kann sich insbesondere um einen Kraftsensor handeln, der eine untere und eine obere Kontakt- und Messfläche 5,6 aufweist. Der als Kraftsensor ausgeführte 4 kann einen Referenzpunkt 7 aufweisen, der z.B. an der unteren Messfläche 5 zentral angeordnet ist. Die Messflächen 5, 6 können von einem externen oder einem in dem Sensor 4 integrierten Zentrierelement 70 umgeben sein. Der Sensor 4 kann zu Kalibrierzwecken dienen und einen Kalibriersensor darstellen. Er kann ansonsten zu beliebigen anderen Zwecken eingesetzt und entsprechend in geeigneter Weise ausgebildet sein.

Die Sensorlagerung 8 umfasst im Falle des vorliegenden Ausführungsbeispiels eine oder mehreren Bewegungsachsen. Diese können je nach Lagerungsorientierung beliebig im Raum verlaufen, was bei der Auswertung der Sensorsignale berücksichtigt werden kann. Vorzugsweise wird die Sensorlagerung 8 derart ausgerichtet, dass ihre Bewegungsachsen im Wesentlichen mit orthogonalen Raumachsen x, y, z zusammenfallen. Die nachfolgende Beschreibung geht von dieser Annahme aus.

Im Falle des vorliegenden Ausführungsbeispiels weist die Sensorlagerung 8 weist in Richtung der z-Raumachse ausgerichtete z-Führung auf, die als eine Parallelogrammführung 16 ausgebildet ist. Die Parallelogrammführung kann die einzige Bewegungsachse der Sensorlagerung 8.

Die Parallelogrammführung 16 kann auch ihrerseits um eine weitere Lagerungsachse beweglich sein. Dies kann z.B. eine in Richtung der y-Raumachse gerichteten y-Führung sein, die im Falle des vorliegenden Ausführungsbeispiels als Drehgelenk 24 ausgebildet ist. Die y-Führung kann auch als eine lineare Schiebeführung ausgebildet sein. Dies kann z.B. für eine Variante vorgesehen sein, in der die Sensorlagerung 8 zwei Bewegungsachsen umfasst.

Zusätzlich zu den z- und y-Führungen kann auch eine in Richtung der x-Raumachse ausgerichteten x-Führung vorgesehen sein. Dies kann z.B. als eine lineare Schlittenführung 27 ausgebildet sein. Die Sensorlagerung 8 weist in diesem Fall drei Bewegungsachsen auf.

Der Sensor 4 ist bevorzugt so angeordnet und ausgerichtet, dass er eine Wirkrichtung in Richtung der z-Raumachse aufweist, wobei z.B. die Messflächen 5, 6 in der vertikalen z-Richtung übereinander angeordnet sind und sich in der x-y-Ebene erstrecken.

Der Sensor 4 ist mittels eines Sensorhalters 15 mit der z-Führung bzw. der Parallelogrammführung 16. verbunden. Der Sensorhalter 15 ist beispielsweise als Ausleger ausgebildet und weist eine definierte Aufnahme für den Sensor 4 auf.

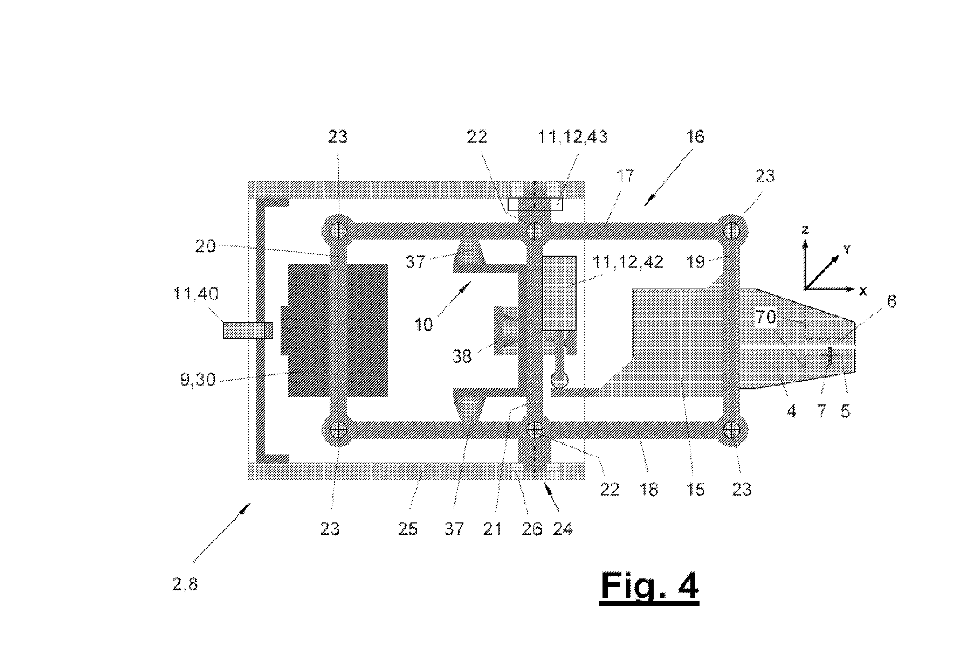

Die Fig. 3 zeigt die als dreiachsige Sensorlagerung ausgebildete Sensorlagerung 8 in einer aufgebrochenen Seitenansicht. Die Figuren 4 bis 6 zeigen Komponenten der Sensorlagerung 8, auf die die Sensorlagerung 8 ggf. reduziert werden kann.

Im Falle des vorliegenden Ausführungsbeispiels umfasst die Sensorlagerung 8 eine Ausgleichseinrichtung 9, welche zumindest das Sensorgewicht und ggf. auch die Gewichte anderer bewegter Massen der Sensorlagerung 8 bei der Sensorbetätigung und -bewegung kompensiert.

Die Sensorlagerung 8 kann ferner eine Rückstelleinrichtung 10 aufweisen, welche an den ein oder mehreren Bewegungsachsen wirkt und eine Rückstellung der Ausweichbewegung in eine vorzugsweise definierte Ausgangslage bewirkt. Die Rückstellkräfte sind dabei relativ gering und gegenüber den auf den Sensor 4 einwirkenden Betätigungs- und Bewegungskräften vernachlässigbar.

Die Sensorlagerung 8 kann ferner eine Positionskontrolle 11 aufweisen. Diese kann ebenfalls an den ein oder mehreren Bewegungsachsen wirken und verschiedene Funktionen aufweisen. Dadurch kann einerseits die tatsächliche Bewegung oder Position der Bewegungsachse erfasst werden, wofür die Positionskontrolle 11 eine geeignete Messeinrichtung 12 aufweist, die z.B. als Positionsmesser ausgebildet ist. Die Position kann in beliebig geeigneter Weise erfasst werden. Vorzugsweise wird ein entlang einer Bewegungsachse bei der Sensorbetätigung zurückgelegter Weg gemessen. Die Positionskontrolle 11 kann ferner die vorerwähnte Ausgangslage der ein oder mehreren Bewegungsachse detektieren. Auf dieser Null-Stellung und den erfassten Positionsänderungen kann die Auswertung der Sensorsignale basieren.

Die z-Führung bzw. Parallelogrammführung 16 ist mit dem Sensor 4 bzw. dem Sensorhalter 15 verbunden und ist in der Fig. 4 in ihren Bestandteilen dargestellt. Die Parallelogrammführung 16 weist im Falle des vorliegenden Ausführungsbeispiels miteinander gelenkig verbundene Längs- und Querlenker 17, 18, 19, 20 auf. Im gezeigten Ausführungsbeispiel sind zwei parallele Längslenker 17, 18 vorgesehen, die sich in x-Richtung erstrecken. Sie sind an ihren Enden jeweils über äußere Gelenke 23 mit zwei in z-Richtung sich erstreckende parallele Querlänger 19, 20 verbunden. Am äußeren Querlenker 19 ist der Sensor 4 bzw. der Sensorhalter 15 angeordnet. Am hinteren bzw. inneren Querlenker 20 ist ein Gegengewicht 30 der Ausgleichseinrichtung 9 montiert.

Die Längslenker 17, 18 und die Querlenker 19, 20 weisen jeweils gleiche Längen auf. Die Längsträger 17, 18 weisen im inneren Bereich jeweils ein inneres Gelenk 22 auf, dessen Gelenkachse in y-Richtung sich erstreckt und um das die Längslenker 17, 18 drehen können.

In der gezeigten Ausführungsform ist die Parallelogrammführung 16 als Doppel-Parallelogramm ausgebildet, welches um die inneren Gelenke 22 schwenkt. Die inneren Gelenke 22 sind vorzugsweise mittig an den Längsträgern 17,18 angeordnet und liegen in z-Richtung übereinander. Die Parallelogrammführung 16 befindet sich in einem umgebenden und z.B. gehäuse- bzw. rohrartigen Träger 25 und ist dort abgestützt, z.B. über die inneren Gelenke 22.

Im Falle des vorliegenden Ausführungsbeispiels führt der Sensor 4 bei seiner Betätigung in z-Richtung eine in z-Richtung verlaufende Bogenbewegung aus und behält dabei seine Ausrichtung mit den Messflächen 5, 6 in der x-y-Ebene. Das Gegengewicht 30 kompensiert das Gewicht von Sensor 4 und Sensorhalter 15 und das Moment um die y-Achse.

In einer anderen Ausführungsform kann die Parallelogrammführung 16 in konventioneller Weise ausgebildet sein und nur vier Gelenke 23 aufweisen, wobei der Gewichtsausgleich 9 in anderer Weise ausgebildet ist, z.B. durch eine Federanordnung.

In der gezeigten Ausführungsform sind die inneren Gelenke 22 an einer verbindenden und in z-Richtung sich erstreckenden Lenkerstütze 21 angeordnet. Diese ist für eine mehrachsige Sensorlagerung 8 von Vorteil und kann bei einer Einachslagerungsausbildung weg gelassen werden.

Die Rückstelleinrichtung 10 wirkt auf die Parallelogrammführung 16 und dabei vorzugsweise auf die Längslenker 17, 18. Sie weist ein oder mehrere, insbesondere zwei, Rückstellelemente 37 mit Wirkung in z-Richtung auf, die an einer U-förmigen Stütze montiert sind, die z.B. an der Lenkerstütze 21 angeordnet ist. Die Rückstellelemente 37 können z.B. kompressible Pufferkörper aufweisen und gegen die Längsträger 17, 18 drücken.

Die Positionskontrolle 11 kann ein Kontrollelement 40, z.B. einen Initiator, aufweisen, welches die Null-Stellung der Parallelogrammführung 16 detektiert. Das Kontrollelement 40 kann relativ ortsfest in einem die Parallelogrammführung 16 umgebenden Träger 25 angeordnet sein und ist z.B. auf die Rückseite des Gegengewichts 30 gerichtet. Hier kann sich ein Gegenelement, z.B. eine kreisrunde Marke, befinden. Der Initiator 40 kann z.B. induktiv oder kapazitiv diese Marke erfassen und vom umgebenden Gegengewicht 30 unterscheiden.

Die Messeinrichtung 12 bzw. der Positionsmesser erfasst die Sensorbewegungen in z-Richtung. Hierfür ist ein entsprechendes Messelement 42 vorgesehen, welches z.B. an der Sensorstütze 21 angeordnet ist. Das Messelement 42 steht mit dem Sensor 4 oder dem Sensorhalter 15 in Kontakt und misst die Positionsänderung, insbesondere den Weg in z-Richtung. Das Messelement 42 kann z.B. als Sensor, insbesondere als Potentiometer, als Federanordnung mit Hall-Sensor oder in beliebig anderer Weise ausgebildet sein.

Die gezeigte z-Führung bzw. Parallelogrammführung 16 bildet eine erste Komponente der Sensorlagerung 8. Hierauf kann sich die Sensorlagerung 8 in einer einfachen Ausführungsform beschränken.

Die Fig. 4 zeigt außerdem die zweiachsige Ausführung der Sensorlagerung 8, bei der die Parallelogrammführung 16 um eine weitere Bewegungsachse, insbesondere um die y-Achse, ausweichfähig ist. Im gezeigten Ausführungsbeispiel ist die y-Führung als Drehgelenk 24 ausgebildet. Dessen Achse verläuft durch die inneren Gelenke 22 der Parallelogrammführung 16 und kreuzt sich mit deren Achsen. Die Achszuordnung kann alternativ versetzt sein. Die Achse des Drehgelenks 24 erstreckt sich in z-Richtung und ermöglicht dem Sensor 4 Bogenbewegungen, die eine überwiegende Bewegungskomponente in y-Richtung aufweisen.

Das Drehgelenk 24 wird von zwei Lagern 26 gebildet, mit denen die beiden über die Gelenke 22 überstehenden Lenkerstützen 21 mittels Lagerzapfen im umgebenden Träger 25 gelagert sind. Die Lenkerstütze 21 kann eine plattenförmige Gestalt haben, deren Hauptebene sich in y-Richtung erstreckt.

Der Gewichtsausgleich 9 wird für die Bewegungen in y-Richtung durch das Gegengewicht 30 gebildet. Die Rückstelleinrichtung 10 kann an der Lenkerstütze 21 angreifen und hierfür zwei am Träger 25 gelagerte Rückstellelemente 38 für die y-Richtung aufweisen. Diese wieder z.B. als kompressible Pufferkörper ausgebildeten Rückstellelemente 38 können mit seitlichem Abstand zur Achse des Drehgelenks 24 bzw. Lagers 26 angeordnet sein.

Das Kontrollelement 40 kann auch für die Positionskontrolle der Drehbewegungen um das Drehgelenk 24 dienen. Hierfür ist eine kreisrunde oder quadratische Ausbildung der Marke an der Gewichtsrückseite von Vorteil. Die Messeinrichtung 12 kann ein Messelement 41 an geeigneter Stelle, z.B. an einem Lager 26, aufweisen. Über die gemessene Drehbewegung kann auf die Bewegung des Referenzpunktes 7 rückgerechnet werden.

In der gezeigten Anordnung bilden die Parallelogrammführung 16 und das Drehgelenk 24 eine Kreuzachsenlagerung oder kardanische Lagerung für die Sensorbewegungen. Die Lenkerstütze 21 ist in ihren Mehrfachfunktionen hierfür besonders günstig. Die Kombination von z- und y-Führung bzw. Parallelogrammführung 16 und Drehgelenk 24 bildet eine zweite Komponente der Sensorlagerung 8 mit zwei Ausweich-Bewegungsachsen des Sensors 4.

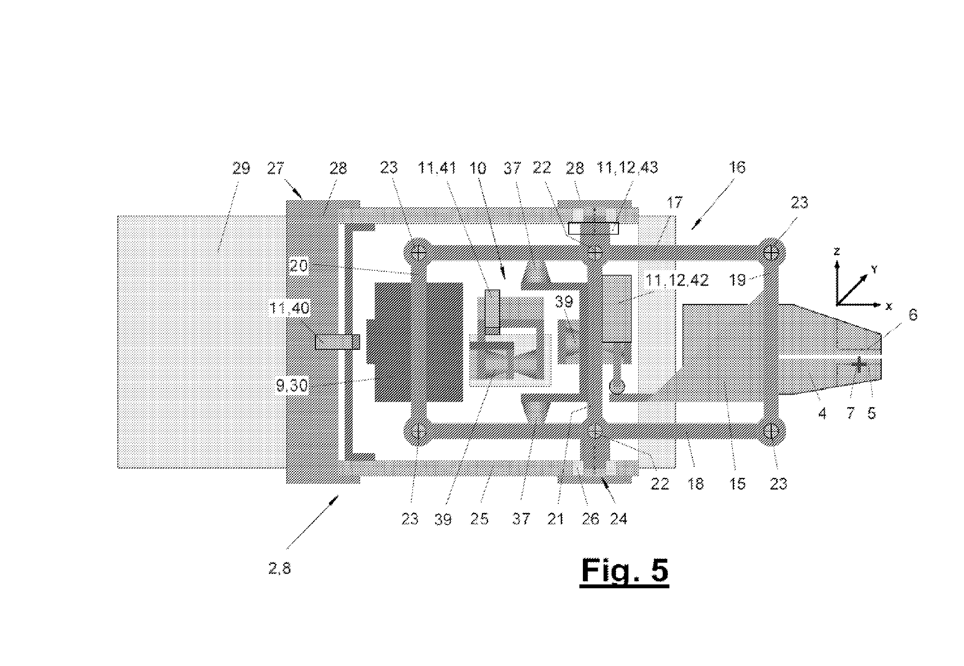

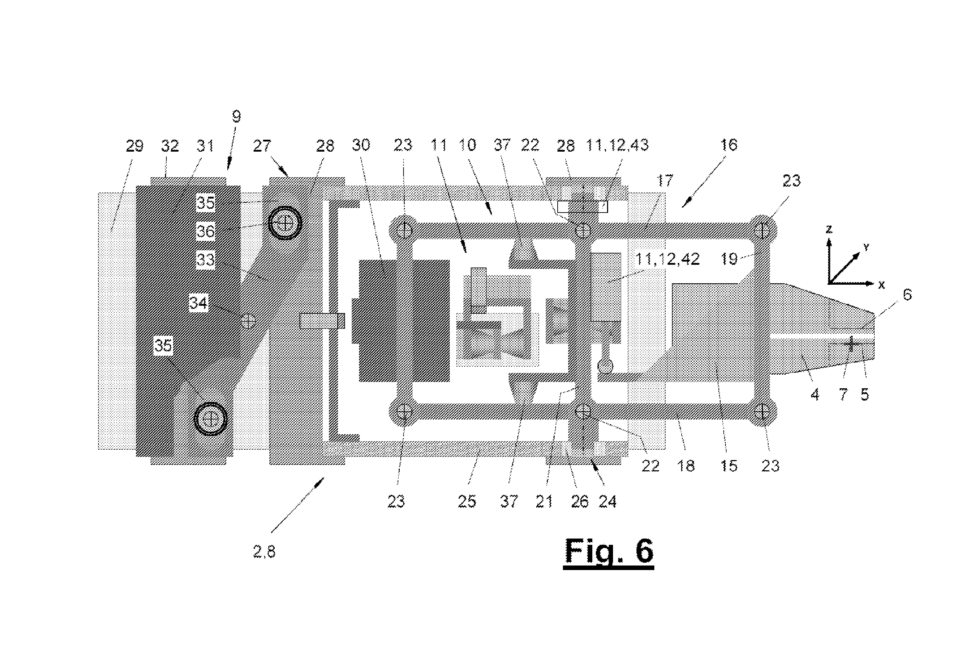

Figur 5 und 6 zeigen die weitere Aufrüstung der Sensorlagerung 8 mit einer dritten Bewegungsachse in x-Richtung, die als Schlittenführung 27 ausgebildet ist.

Wie Figur 5 verdeutlicht, ist der vorbeschriebene Träger 25 mit der darin aufgenommenen z- und y-Führung 16, 24 auf einem Schlitten 28 angeordnet, welcher einteilig sein kann oder aus zwei oder mehr Teilschlitten gebildet werden kann. Der Schlitten 28 ist an einer Führungsbahn 29 linear beweglich in x-Richtung gehalten, wobei die Führungsbahn 29 in einem umgebenden Gestell 13 gehalten ist. Das Gestell 13 kann z.B. als rohrförmiges Gehäuse ausgebildet sein, durch dessen Frontöffnung der Sensor 4 mit Teilen der Längsträger 17, 18 und des Sensorträgers 19 ragt. Das in Figur 3 dargestellte Gestell oder Gehäuse 13 ist an der gegenüberliegenden Stirnseite oder an anderer geeigneter Stelle mit einem Anschluss 14 zur Verbindung mit einer stationären oder instationären Trageinrichtung 45, 71 versehen.

Für den Gewichtsausgleich 9 in x-Richtung kann gemäß Figur 6 auf einem weiteren und auf der Führungsbahn 29 gelagerten Schlitten 32 ein Gegengewicht 31 angeordnet sein, welches das Gewicht des Sensors 4 und der anderen Teile der Lagerungskomponente ausgleicht. Über ein bewegliches Ausgleichselement 33 sind die Schlitten 28, 32 gegenläufig gekoppelt. Das Ausgleichselement 33 ist z.B. als Kulissenhebel ausgebildet, der über eine an der Führungsbahn 29 abgestützte und in y-Richtung sich erstreckende Achse 34 schwenkbar ist. Der Kulissenhebel 33 kann eine beidseits abgekröpfte Formgebung aufweisen und an den Enden Langlochführungen aufweisen. Hier sind z.B. an den Hebelenden Langlöcher 35 angeordnet, die mit Stiften 36 an den Schlitten 28, 32 im Eingriff stehen. Die Schlitten 28, 32 führen dabei gegenläufige Bewegungen aus, wobei die Gewichte bzw. Massen in x-Richtung und die Momente um die vorzugsweise zentrale Achse 34 kompensiert werden.

Die Rückstelleinrichtung 10 kann gemäß Figur 5 eine in den Innenraum des Trägers 25 durch ein Fenster in der Trägerwand ragenden Steg aufweisen, der am Gestell 13 montiert ist und an dem beidseits Rückstellelemente 39 der vorbeschriebenen Art angreifen und in x-Richtung wirksam sind. Die Rückstellelemente 39 sind am Träger 25 innenseitig montiert. Hier kann sich auch ein Kontrollelement 41 für die Stellungsdetektion befinden, welches ebenfalls als Initiator ausgebildet sein kann und mit dem vorerwähnten Steg zusammenwirkt.

Die Messeinrichtung 12 weist ein Messelement 44 für die Erfassung von Positionsänderungen des Trägers 25 in x-Richtung auf. Auch dieses Messelement 44 kann wie die anderen als Sensor, insbesondere als Wegmesser, ausgebildet sein. Es kann an geeigneter Stelle, z.B. an der Schlittenführung 27, angeordnet sein. Das Messelement 44 kann einem der Schlitten 28, 31 oder dem Träger 25 zugeordnet sein.

Die Sensorlagerung 8 in den verschiedenen Ausgestaltungen bzw. Ausbaustufen oder Komponenten umfasst eine eigenständige erfinderische Bedeutung und kann in beliebiger Weise und in Verbindung mit beliebigen Trageinrichtungen 45, 71 Verwendung finden.

In den Figuren 1 und 2 sowie 7 bis 9 ist eine weitere Ausführungsform und ein Einsatz bei einem Kalibrierwerkzeug 2 bzw. einer Kalibriereinrichtung 1 der Sensorlagerung 8 gezeigt.

Die Sensorlagerung 8 und der Sensor 4 können ein Kalibrierwerkzeug 2 bilden. Dieses kann zum Kalibrieren von Schweißwerkzeugen 52 eingesetzt werden, bei denen es sich vorzugsweise um elektrische Schweißwerkzeuge und insbesondere um elektrische Widerstandsschweißeinrichtungen, insbesondere elektrische Punktschweißzangen, handelt.

Für die nachfolgend beschriebene Kalibriereinrichtung 1 kann das Kalibrierwerkzeug 2 alternativ eine Sensorlagerung 8 aufweisen, die in anderer Weise als im Ausführungsbeispiel von Figur 3 bis 6 ausgebildet ist. Diese kann z.B. x-, y- und z-Führungen 27, 24, 16 aufweisen, die als miteinander gekoppelte Schlittenführungen mit Linearachsen, Gewichtsausgleich, Rückstelleinrichtung und Positionskontrolle ausgebildet sind. In weiterer Abwandlung sind andere Kinematiken dieser Führung in einer oder mehreren Raumachsen möglich.

Die Figuren 1 und 2 sowie 7 bis 9 zeigen eine solche Schweißzange 52 in einem schematisierten Ausführungsbeispiel in Form einer X-Zange. Diese weist zwei über ein Lager oder Gelenk 55 schwenkbar miteinander verbundene Zangenarme 53,54 auf, die mittels eines Zangenantriebs 56 geöffnet und geschlossen werden können. Der feste Zangenarm 53 umfasst einen Anschluss zur Verbindung mit einem Handflansch 47 einer stationären oder instationären Trageinrichtung 45, 71. Der Zangenantrieb 56 ist zwischen den beiden Zangenarmen 53, 54 angeordnet und umfasst z.B. einen Motor 57, insbesondere einem steuerbaren Elektromotor, und ein Treibelement 58, z.B. eine Spindel. Am Zangenantrieb 56 kann ein Sensor 59 zur Ermittlung der Antriebsstellung, insbesondere der Ausfahrposition der Spindel 58 angeordnet sein. Die Schweißzange 52 kann ohne einen mechanischen Zangenausgleich auskommen.

Die Zangenarme 53,54 sind federelastisch und tragen jeweils an ihrem Ende eine Elektrode 61,62. Die Elektroden 61,62 können jeweils einen Elektrodenhalter 64 und eine ggf. austauschbaren Elektrodenkappe 65 aufweisen. Die Elektrodenspitze 63 der Elektrode 61 am festen Zangenarm 53 bildet die Referenz für die Zangenbewegungen. Hier kann insbesondere der TCP der Schweißzange 52 angeordnet sein. Sie wirkt mit dem Referenzpunkt 7 des Sensors 4 zusammen.

Die Schweißzange 52 kann als kraftgeregelte Schweißzange eingesetzt werden. Hierfür kann sie an geeigneter Stelle, z.B. am festen Zangenarm 53, am Zangenantrieb 56 oder dergleichen einen Sensor 60 zur Ermittlung der Zangenkraft beim Schließen bzw. der Kraft, mit der die Elektroden 61,62 gegen ein Werkstück nicht dargestellt angedrückt werden, aufweisen.

In Abwandlung der gezeigten Ausführungsform kann eine Schweißzange 52, insbesondere eine elektrische Widerstandspunktschweißzange, eine andere Zangenkonfiguration aufweisen und z.B. als C-Zange ausgeführt sein. Die Armgeometrie und die Antriebsanordnung ändern sich hierbei entsprechend.

Die Schweißzange 52 wird z.B. von einem mehrachsigen Manipulator 45 geführt, der in den Figuren 1 und 2 schematisch angedeutet ist. Der Manipulator 45 kann eine beliebige Zahl und Konfiguration von rotatorischen und/oder translatorischen Bewegungsachsen haben. Vorzugsweise handelt es sich um einen Industrieroboter, insbesondere um einen Gelenkarmroboter mit z.B. sechs rotatorischen Achsen und ggf. ein oder mehreren Zusatzachsen. Der Manipulator oder Roboter 45 trägt am Ende seines letzten Arms eine Hand 46, die ebenfalls beweglich ist und z.B. zwei oder drei rotatorische Bewegungsachsen aufweist. Die Roboterhand 46 umfasst ein Abtriebselement 47, welches z.B. als drehender Handflansch ausgebildet ist. Die Drehachse oder Flanschachse 48 bildet die sog. Handachse oder Abtriebsachse. Im Handwurzelpunkt kann ein Flanschkoordinatensystem aufgespannt sein, welches über einen Transformationsvektor mit einem Welt-Koordinatensystem des Roboters 45 gekoppelt ist. Die Lage des TCP kann sich auf das Flanschkoordinatensystem beziehen. Der Manipulator oder Roboter 45 umfasst eine Steuerung 49, insbesondere Robotersteuerung.

Das Schweißwerkzeug 52 und das Kalibrierwerkzeug 2 können von einem oder zwei Manipulatoren 45 relativ zueinander bewegt werden. Figur 1 und 2 zeigen hierfür zwei Möglichkeiten. In der Figur 1 ist das Kalibrierwerkzeug 2 an der Roboterhand 46 angeordnet, wobei das Schweißwerkzeug 52 an einem stationären Gestell 71 montiert ist und eine stationäre Schweißzange bildet. In der Variante von Figur 2 ist die Kinematik umgekehrt, wobei sich das Kalibrierwerkzeug 2 an einem stationären Gestell 71 befindet und das Schweißwerkzeug 52 vom Manipulator 45 geführt ist. Abwandlungen dieser Ausführungsformen sind möglich, indem z.B. das Kalibrierwerkzeug 2 und das Schweißwerkzeug 52 jeweils von einem mehrachsigen Manipulator 45 geführt werden. Bei einer solchen Variante kann z.B. das Kalibrierwerkzeug 2 mit dem Anschluss 14 als Wechselwerkzeug ausgebildet sein und bei Bedarf von einem Manipulator 45 in einer Schweißzelle gegriffen und anderen Schweißrobotern und Schweißwerkzeugen 52 zum Kalibrieren zugeführt werden. In einer weiteren Abwandlung kann das Gestell 71 statt der gezeigten flurgebundenen vertikalen Säule eine andere Ausbildung haben und kann auch eine einfache Bewegungskinematik, z.B. eine Schwenkachse, besitzen.

Für die Schweißzange 52 kann es zur Durchführung des Schweißprozesses, insbesondere zum robotergestützten Widerstandspunktschweißen folgende bedeutsame mechanische Kenngrößen geben.

Eine erste Kenngröße ist die Position der auf dem festen Zangenarm 53 montierten Elektrodenspitze 63 in Bezug auf den Roboterflansch bzw. die Handachse 48 bei unbelasteter und nicht verformter Schweißzange 52. Hierbei kann es insbesondere um den vertikalen Abstand oder Versatz a in Richtung der räumlichen z-Achse gehen, der z.B. in Figur 2 angedeutet ist. Wenn die Elektrodenkappe 65 verschleißt, wird sie nachbearbeitet und insbesondere nachgefräst, wodurch sich die Lage der Elektrodenspitze 63 und damit des TCP gegenüber dem Handwurzelpunkt bzw. der Handachse 48 ändert.

Eine andere bedeutsame Kenngröße ist die Position des Zangenantriebs 56 bei geschlossener Zange mit Elektrodenkraft Null. Dies ist die Situation, in der die auf dem beweglichen und vom Zangenantrieb 56 verschwenkten Zangenarm 54 montierte Elektrodenspitze oder Kappenspitze die auf dem anderen festen Zangenarm 53 montierte Elektrodenspitze 63 oder Kappenspitze kraftlos berührt.

Eine weitere Kenngröße ist die Elastizität des festen Zangenarms 53. Dies betrifft insbesondere das Verhältnis der Positionsänderung der auf dem festen Zangenarm 53 montierten Elektrodenspitze 63 zur Kraftbelastung dieser Elektrodenkappe.

Eine vierte relevante Kenngröße ist die Elastizität des beweglichen Zangenarms 54. Dies kann ebenfalls das Verhältnis der Positionsänderung der hier montierten Elektrodenspitze zur Kraftbelastung dieser Elektrodenkappe betreffen. In die Elastizität der Zangenarme 53,54 fließt auch eine eventuelle Ausweichbewegung oder Elastizität der Elektroden 61,62 ein. Dies betrifft insbesondere eine seitliche Ausweichbewegung und einen Versatz b der Elektrodenspitzen 63. Ein solcher Versatz kann insbesondere bei schräg gestellten Elektroden 61, 62 auftreten, die beim Schließen nicht senkrecht auf die Werkstückoberfläche treffen. Eine elastizitätsbedingte Ausweichbewegung kann eine entsprechende Querkraft bewirken, die ein Wegdrücken des Werkstücks oder des Roboters 45 zur Folge hat. Eine Schrägstellung von einer oder beiden Elektroden 61, 62 kann in einer oder in mehreren Richtungen, z.B. in x- und/oder y-Richtung bestehen.

Eine fünfte relevante Kenngröße ist das Messverhalten des Kraftsensors 60. Dies betrifft insbesondere den Proportionalitätsfaktor des Kraftsensors 60 für die Erfassung der Elektrodenkraft, also der Kraft, mit der die Elektroden 61, 62 zusammengedrückt werden.

Die Kalibriereinrichtung 1 weist neben dem Kalibrierwerkzeug 2 eine Auswerteeinrichtung 3 für die von der Positionskontrolle 11, insbesondere vom Positionsmesser 12 und vom Sensor 4 sowie vom Kraftsensor 60 emittierten Signale auf. Die Auswerteeinrichtung 3 kann eine oder mehrere Erfassungseinrichtungen 66, 67, 68, 69 zur Erfassung von ein oder mehreren der vorgenannten Kenngrößen aufweisen. In den gezeigten Ausführungsformen sind die vier Erfassungseinrichtungen 66,67,68,69 miteinander kombiniert und wirken gemeinsam zur Erfassung aller vorgenannten Kenngrößen. Alternativ können weniger Kenngrößen erfasst werden. In weiterer Abwandlung ist eine getrennte Einzelerfassung möglich.

Die Erfassungseinrichtung 67 ist für die Zangenelastizität zuständig. Hierbei können insbesondere die Nachgiebigkeit der Zangenarme in ihrer gemeinsamen Hauptebene, z.B. in z-Richtung erfasst werden. Ferner können auch seitliche Nachgiebigkeiten und Ausweichbewegungen b, insbesondere im Elektrodenbereich ermittelt werden. Vorzugsweise ist die Erfassung dreidimensional.

Die Erfassungseinrichtung 66 ermittelt den Elektrodenversatz a und insbesondere den vertikalen Abstand in z-Richtung zwischen der festen Elektrodenspitze 63 und der Handachse 48. Dieser Abstand wird im unbelasteten und unverformten Zangenzustand erfasst.

Die Erfassungseinrichtung 69 wirkt mit dem Zangenantrieb 56 zusammen und ermittelt insbesondere die Stellung des Zangenantriebs 56 bei geschlossener Schweißzange 52 und bei einer Elektrodenkraft Null. Mit der Erfassungseinrichtung 69 können außerdem die Antriebsstellungen bei ein oder mehreren anderen Kraftniveaus und bei mit Kraft zusammengepressten Elektroden 61, 62 ermittelt werden. Die Erfassungseinrichtung 69 wirkt hierbei mit dem Sensor 59 zusammen, welcher ggf. auch mehrfach vorhanden sein kann.

Die Erfassungseinrichtung 68 ist für eine Messung der an der Schweißzange 52 in Schließstellung und bei Antriebsbetätigung wirkenden Kraft zuständig. Hierbei wird insbesondere ein Proportionalitätsfaktor des einfach oder mehrfach vorhandenen Sensors 60 an der Schweißzange 52 zur Ermittlung der Zangen- oder Elektrodenkraft erfasst. Der Sensor 60 kann hierüber kalibriert werden.

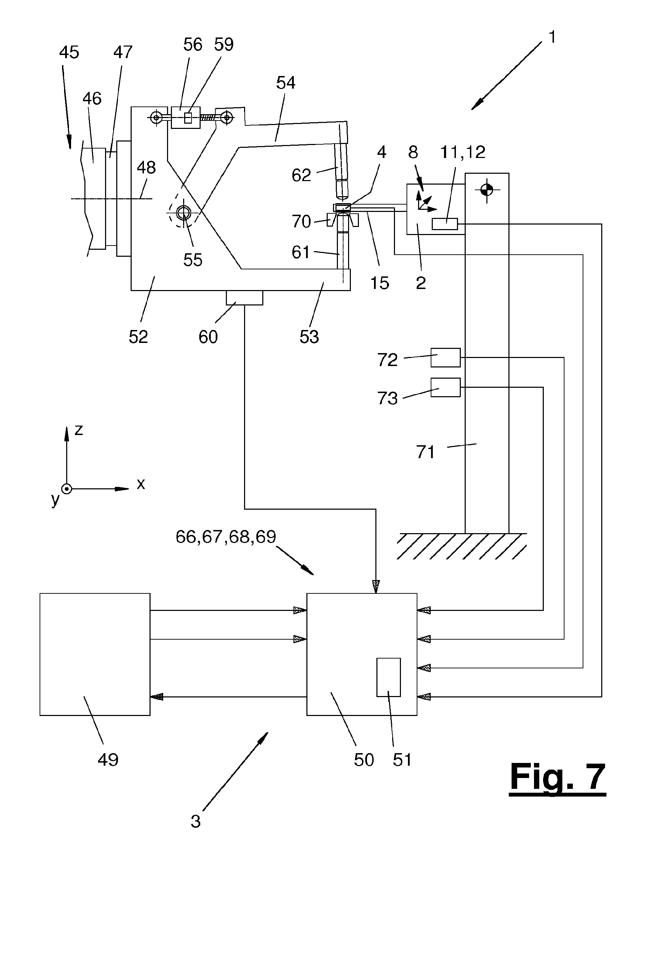

Die Auswerteeinrichtung 3 kann in beliebiger Weise ausgebildet und angeordnet sein. Sie ist z.B. gemäß der Schemadarstellung von Figur 7 bis 9 in eine Steuerung 50 integriert, die als Technologiesteuerung fungieren kann und die auch der Kalibrierung dient. Die Steuerung bzw. Technologiesteuerung 50 kann darüber hinaus weitere Funktionen haben, z.B. als Prozesssteuerung oder Schweißsteuerung. Die Auswerteeinrichtung 3 bzw. die Steuerung 50 kann als eigenständiges Hardware-Teil konzipiert sein und kann eine eigene Recheneinheit 51 mit entsprechenden Speichern, Schnittstellen und Programmen aufweisen. In Abwandlung kann die Auswerteeinrichtung 3 als Softwaremodul in eine andere Steuerung, z.B. in die Robotersteuerung 49, implementiert sein. Figur 1 und 2 zeigen die Anordnung schematisch.

Die Kalibriereinrichtung 1 bzw. die Auswerteeinrichtung 3 weist in der gezeigten Ausführungsform mehrere kombinierte Erfassungseinrichtungen 66, 67, 68, 69 auf, die bei einer Zangenschließbewegung gemeinsam bedienbar sind und ihre Erfassungsfunktionen ausführen. Hierbei können mehrere der vorgenannten Kenngrößen gleichzeitig oder kurz nacheinander erfasst werden.

Das Kalibrierwerkzeug 2 weist den ein- oder mehrachsig und insbesondere räumlich beweglichen Sensorhalter 15 mit einem Kraftsensor 4 auf, welcher an gegenüberliegenden Seiten aktive Messflächen 5, 6 besitzt, die beim Schließen der Schweißzange 52 von den Elektroden 61, 62 kontaktiert werden. Schematisch in Den Figuren 4 und 7 angedeutete Zentrierelemente 70 können für eine Elektrodenführung und einen zentrierten Elektrodenangriff an den Messflächen 5,6 sowie eine sichere Bewegungsübertragung sorgen. Der Kraftsensor 4 ist mit der Auswerteeinrichtung 3 signaltechnisch über eine Leitung oder drahtlos verbunden.

Die Messeinrichtung 12 bzw. der Positionsmesser des Kalibrierwerkzeugs 2 kann die räumlichen Bewegungen des Sensorhalters 15 und des Kraftsensors 4 z.B. über die drei translatorischen Raumachsen x, y und z mittels dreier entsprechender Wegmesser 42,43,44 erfassen. Alternativ ist eine andere konstruktive und funktionale Ausgestaltung der Messeinrichtung 12 und des hierdurch verkörperten Positionsmessers möglich. Die Messeinrichtung 12 und ggf. die Initiatoren 40,41 sind ebenfalls mit der Auswerteeinrichtung 3 signaltechnisch über eine Leitung oder drahtlos verbunden.

Die Kalibriereinrichtung 1 weist einen oder mehrere Speicher 72, 73 auf, in denen die Kalibrierdaten des Kraftsensors 4 und des Positionsmessers 12 gespeichert sind. Diese Kalibrierdaten können z.B. Nullpunkte, Proportionalitätsfaktoren und Kennlinien des Positionsmessers 12 und seiner Sensoren 42, 43, 44 sein. Der zugehörige Speicher 73 ist mit der Auswerteeinrichtung 3 verbunden, welche die Kalibrierdaten abrufen kann.

Die Ausgangssignale des Positionsmessers 12 werden von der Auswerteeinrichtung 3 eingelesen und mit den aus dem Speicher 73 ausgelesenen Kalibrierdaten des Positionsmessers 12 verrechnet. Aus dieser Berechnung ergeben sich die Ist-Werte der Position des Referenz-Kraftsensors 4. Wenn die am festen Zangenarm 53 angebrachte Elektrodenspitze 63 den Kraftsensor 4 kontaktiert, kann hierüber auch die Position der Elektrodenspitze 63 ermittelt werden. Die Positionsermittlung findet im Raum statt. Unter Bezug auf das örtliche Koordinatensystem des Kalibrierwerkzeugs 2, welches wiederum einen bekannten Bezug zum Welt-Koordinatensystem oder einem anderen relevanten Koordinatensystem des Manipulators oder Roboters 45 hat.

Der Referenz-Kraftsensor 4 weist ebenfalls Kalibrierdaten, z.B. Nullpunkt, Proportionalitätsfaktor, Kennlinie oder dgl. auf, die im Speicher 72 abgelegt sind und von dort aus über die angebundene Auswerteeinrichtung 3 abgerufen werden können. Das Ausgangssignal des Referenz-Kraftsensors 4 wird von der Auswerteeinrichtung 3 eingelesen und mit den aus dem Speicher 72 ausgelesenen Kalibrierdaten verrechnet. Aus dieser Berechnung ergibt sich der Referenz-Ist-Wert der Elektrodenkraft.

Der Kraftsensor 60 an der Schweißzange 52 ist ebenfalls mit der Auswerteeinrichtung 3 verbunden. Ferner besteht eine Signalverbindung zwischen der Auswerteeinrichtung 3 und der Robotersteuerung 49. Die Robotersteuerung 49 meldet hierüber die Position des Handflansches 47 und seiner Handachse 48 an die Auswerteeinrichtung 3. Der Sensor 59 für die Antriebsstellung kann mit der Robotersteuerung 49 verbunden sein, wobei hierüber die Position des Zangenantriebs 56 ebenfalls an die Auswerteeinrichtung 3 gemeldet wird. Die Auswerteeinrichtung 3 gibt ihrerseits ein Signal an die Robotersteuerung 49 über das Erreichen der angefahrenen Position der Schweißzange 52. In der Auswerteeinrichtung 3 werden die Funktionen der Erfassungseinrichtungen 66, 67, 68, 69 und die Erfassungs- und Auswertungsvorgänge durchgeführt.

Bekannt sind außerdem die konstanten Werte des Antrieb-Verhältnisses, d.h. des Verhältnisses der Positionsänderung der auf dem beweglichen Zangenarm 54 montierten Elektrodenspitze zu der Positionsänderung des Zangenantriebs 56 bei unbelasteter Schweißzange 52. Bekannt ist ferner die Stärke des Kraftsensors, d.h. der Abstand der beiden Messflächen 5,6 des Referenz-Kraftsensors 4. Bekannt ist auch die vorerwähnte Vorrichtungs-Position. Dies meint die Position des Nullpunktes oder Referenzpunktes 7 im Koordinatensystem des Kalibrierwerkzeugs 2 in Bezug auf den Nullpunkt oder das Koordinatensystem des Roboters 45.

Zur Ermittlung der vorgenannten mechanischen Kenngrößen wird z.B. das folgende automatische Bewegungsprogramm für die Ausführungsvariante von Figur 2 und 7 bis 9 abgefahren:
Die geöffnete Schweißzange 52 wird zunächst mit der Elektrodenspitze 63 am festen Zangenarm 53 auf den Referenz-Kraftsensor 4 in Richtung Zentrierelement 70 verfahren, bis die Elektrodenspitze 63 den Kraftsensor 4 kontaktiert und über diese Position noch ein Stück hinausfährt und dabei den Sensorhalter 15 und
den Kraftsensor 4 mitnimmt. Diese Bewegung, z.B. Hebebewegung, wird über den Positionsmesser 12 erfasst.
Die Zangenausrichtung kann z.B. vertikal sein, wobei auch die Zangenbewegung vertikal und in Richtung der z-Achse verläuft. Die Zangenbewegung wird gestoppt,
sobald der Positionsmesser 12 das Erreichen einer vorgegebenen Sensorposition meldet. Die Auswerteeinrichtung 3 berichtet das Erreichen der vorgegebenen Position an die Robotersteuerung 49 und bewirkt einen Stopp der Roboterbewegung und ein anschließendes Schließen der Schweißzange 52 über den Zangenantrieb 56.

Die Schweißzange 52 wird dabei auf den Referenz-Kraftsensor 4 geschlossen, bis der in der Auswerteeinrichtung 3 ermittelte Referenz-Ist-Wert der Elektrodenkraft einen vorgegebenen Wert F1 erreicht. Zu diesem Zeitpunkt werden von der Auswerteeinrichtung 3 folgende Werte eingelesen:
- Die aktuelle Position des Handflansches 47 und seiner Handachse 48,
- Die aktuelle räumliche Position des Sensorhalters 15 bzw. des Referenz-Kraftsensors 4 mittels des Positionsmessers 12,
- Die aktuelle Position des Zangenantriebs 56 und
- Der aktuelle Wert des Kraftsensors 60 an der Schweißzange 52.

Diese Daten werden gemeinsam gespeichert.

Die Schweißzange 52 wird anschließend weiter unter Betätigung des Zangenantriebs 56 auf den Referenz-Kraftsensor 4 geschlossen und angepresst, bis der Referenz-Ist-Wert der Elektrodenkraft einen zweiten vorgegebenen Wert F2 erreicht. Zu diesem Zeitpunkt werden von der Auswerteeinrichtung 3 wieder die vorgenannten Werte für die aktuellen Positionsangaben des Positionsmessers 12 und des Sensors 59 für die Antriebsstellung sowie der Wert des Kraftsensors 60 und der Schweißzange 52 eingelesen und gemeinsam gespeichert.

Die Auswerteeinrichtung 3 berechnet aus den gemessenen und gespeicherten Werten die Positionen und Kräfte und aus den bekannten Werten für das Antriebs-Verhältnis, die Stärke des Kraftsensors und die Vorrichtungsposition die eingangs genannten Kenngrößen. Die berechneten aktuellen Werte dieser Kenngrößen werden verwendet für die genaue Regelung bzw. Steuerung der Elektrodenkraft und der Robotersteuerung 49 zur genauen Positionierung der Schweißzange 52.

Beim vorgenannten ersten Schritt und der Mitnahme des Sensorhalters 15 oder Sensors 4 bei geöffneter Schweißzange 52 durch die feste Elektrodenspitze 63 bis in eine vorgegebene erste Sensorposition kann der vertikale Versatz oder Abstand a der Handachse 48 gegenüber der festen Elektrodenspitze 63 berechnet werden. Die Position der Elektrodenspitze 63 ist über den Positionsmesser 12 bekannt und wird mit der vom Roboter 45 gemeldeten Position der Handachse 48 verglichen.

Beim Schließen der Schweißzange 52 und bei Aufbringung der zwei Zangen- oder Elektrodenkräfte F1 und F2 werden die dreidimensionalen Positionen des Referenz-Kraftsensors 4 erfasst, wobei sich das Sensorhalter 15 wegen der Zangenelastizitäten im Raum bewegt und seine Stellung ändert. Die Position der beiden Elektrodenspitzen wird hierbei in drei Richtungen x, y, z erfasst, wobei die vorgenannten Kenngrößen für den Versatz a und für die Zangenelastizitäten ebenfalls in drei Richtungen berechnet werden können.

Die ermittelten Positionswerte können in Diagrammen, Formeln oder Tabellen in Beziehung zu den Kräften F1 und F2 gesetzt werden, wobei sich hierüber, z.B. durch eine Verbindung von Diagrammpunkten, eine Federkennlinie in der jeweiligen Richtung ergibt. Aus der Extrapolierung der Federkennlinie kann auf eine Position der festen Elektrodenspitze 63 bei einer Elektrodenkraft Null zurückgerechnet werden. Hieraus kann außerdem unter Einbeziehung der vom Sensor 59 gemeldeten Antriebsstellungen auf die für diese kraftlose Elektrodenposition maßgebliche Antriebsstellung berechnet werden. Diese Daten können sich auf Zangenschließstellungen beziehen, in denen alle etwaigen Toleranzen oder Verschleißerscheinungen kompensiert sind.

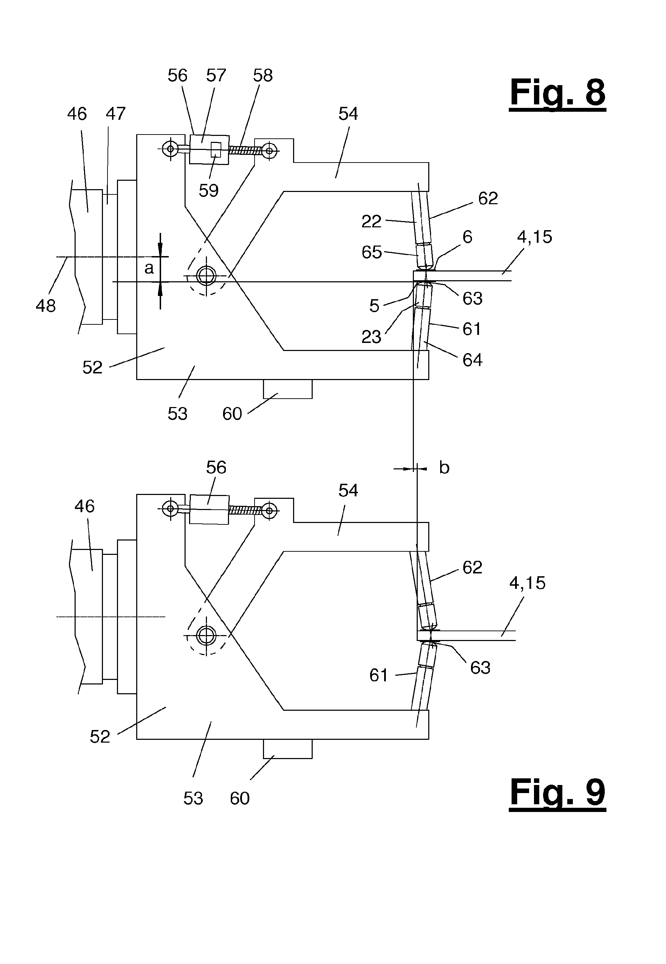

Aus den dreidimensionalen Positionsdaten können ferner unter Berücksichtigung der Antriebsstellungen und des Antrieb-Verhältnisses die Zangenelastizitäten für jeden Zangenarm 53, 54 einzeln herausgerechnet werden. Auch der kraftabhängige seitliche Versatz b der Elektroden 61, 62 kann hierüber ermittelt werden. Dieser ist z.B. im Vergleich von Figur 8 und 9 ersichtlich und kann in einer oder in beiden Achsrichtungen x, y bestehen.

Mit diesem Versatz b kann von der Auswerteeinrichtung 3 die Robotersteuerung 49 beaufschlagt und zu einer Änderung der Position bzw. Bewegung des Roboters 45 veranlasst werden. Um Querkräfte auf das Werkstück zu vermeiden, kann der Roboter 45 eine den seitlichen Versatz b kompensierende Ausweichbewegung ausführen. Hierfür kann ein Korrekturwert in einer oder beiden Steuerungen 3,49,50, gespeichert werden, der beim Schweißprozess zur Änderung der Bahn oder Position des Roboters abgerufen wird.

Ferner kann mit den vorgenommenen Messschritten der Kraftsensor 60 an der Schweißzange 52 durch Ermittlung des Proportionalitätsfaktors zur tatsächlich gemessenen Referenz-Ist-Kraft des Referenz-Kraftsensors 4 kalibriert werden.

Die Auswerteeinrichtung 3 kann aus der Kalibrierung für den Schweißprozess die vorgenannten Kenngrößen zur Modellierung der Schweißzange 52 zur Verfügung stellen, die in die Prozesssteuerung bzw. -regelung einfließen. Dies kann insbesondere in Verbindung mit einer kraftgeregelten Schweißzange 52 und bei einem exakten Anfahren und Schließen der Schweißzange 52 über dem oder den Werkstücken erfolgen.

Die vorbeschriebene Kalibriertechnik kann mit entsprechender Anpassung auch für die kinematischen Varianten, insbesondere von Figur 1 mit der z.B. stationären Schweißzange 52 und dem robotergeführten Kalibrierwerkzeug 2 eingesetzt werden.

Wie Figur 2 schematisch verdeutlicht, kann eine Kalibriereinrichtung 1 auch mit Zusatzgeräten ausgerüstet sein. Diese kann z.B. eine Kappenfräsvorrichtung 75 und/oder eine Kappenwechselvorrichtung 74 sein. Außerdem kann ein Stromsensor 76 vorhanden sein, mit dem die Schweißstromquelle für eine exakte Steuerung oder Regelung des Schweißstroms und/oder der Schweißspannung und/oder der Schweißleistung kalibriert werden kann. Der ebenfalls an die Auswerteeinrichtung 3 angeschlossene Stromsensor 76 kann eine ringförmige Spule aufweisen mit einem plattenförmigen Träger, an dem die Elektroden 61,62 der Schweißzange 52 geschlossen werden.

Abwandlungen der gezeigten und beschriebenen Ausführungsformen sind in verschiedener Weise möglich. Dies betrifft einerseits die konstruktive Ausbildung der Sensorlagerung 8, des Kalibrierwerkzeugs 2, der Kalibriereinrichtung 1 und der Erfassungseinrichtungen 66, 67, 68, 69. Die x-, y- und z-Führungen können in anderer Weise angeordnet, ausgebildet und gekoppelt sein. Z.B. kann die z-Führung, insbesondere die Parallelogrammführung 16 zunächst mit einer x-Führung 27 und diese dann mit einer y-Führung 24 gekoppelt sein. Die Parallelogrammführung 16 kann mehrfach vorhanden sein. Sie kann außerdem einer anderen Bewegungsachse x und/oder y zugeordnet sein. Auch die Sensorausrichtung kann anders als in den gezeigten Beispielen sein. Die Sensorausrichtung muss auch nicht beibehalten werden, insbesondere, wenn zusätzlich Drehführungen für Drehbewegungen um eine oder mehrere Raumachsen vorhanden sind.

Andererseits kann die Anordnung und Funktion der Kalibriereinrichtung 1 und ihre Bestandteile an andere Schweißwerkzeuge angepasst werden. Dies können z.B. Schweißzangen für das Kondensatorentladungsschweißen odergenerell anderer Schweißwerkzeuge sein.

## Patentansprüche

1. Ausweichfähige Sensorlagerung (8) für einen Sensor(4), insbesondere einen Kalibriersensor für Schweißwerkzeuge, insbesondere elektrische Schweißzangen (52), aufweisend eine Parallelogrammführung (16) für den Sensor (4).

2. Sensorlagerung nach Anspruch 1, **dadurch gekennzeichnet, dass** die Sensorlagerung (8) mehreren, insbesondere zwei oder drei Bewegungsachsen ausweichfähig ist, und/oder dass die Parallelogrammführung (16) ihrerseits um mindestens eine weitere Bewegungsachse ausweichfähig angeordnet ist, und/oder dass die Parallelogrammführung (16) an einem Drehgelenk (24) und/oder einer Schlittenführung (27) angeordnet ist.

3. Sensorlagerung nach Anspruch 1 oder 2, **dadurch gekennzeichnet, dass** die Sensorlagerung (8) einen Gewichtsausgleich (9), und/oder eine Positionskontrolle (11), und/oder eine Rückstelleinrichtung (10) aufweist, die insbesondere ein oder mehrere federnde Rückstellelemente (37, 38, 39) aufweist.

4. Sensorlagerung nach einem der vorhergehenden Ansprüche, **dadurch gekennzeichnet, dass** die Positionskontrolle (11) eine oder mehrere Meseinrichtungen (12) zur Erfassung der Ausweichbewegungen an einer oder mehreren Bewegungsachsen der Sensorlagerung (8) aufweist.

5. Sensorlagerung nach einem der vorhergehenden Ansprüche, **dadurch gekennzeichnet, dass** die Parallelogrammführung (16) miteinander gelenkig (23) verbundene Längs- und Querlenker (17-20) aufweist, wobei die Längslenker (17, 18) an einem inneren Gelenk (22) schwenkbar gelagert sind und wobei ein Sensor (4) sowie ein Gegengewicht (30) beidseits des inneren Gelenks (22) gegenüberliegend an einem Querlenker (19, 20) angeordnet sind, und/oder dass die Parallelogrammführung (16) eine Lenkerstütze (21) aufweist, welche die inneren Gelenke (22) trägt und das Drehgelenk (24) bildet, wobei insbesondere die Lenkerstütze (21) in einer Lagerung (26) an einem Träger (25) drehbar aufgenommen ist.

6. Sensorlagerung nach Anspruch 5, **dadurch gekennzeichnet, dass** das innere Gelenk (22) zentral an den Längslenkern (17, 18) angeordnet ist, und/oder die Längslenker (17, 18) im Bereich des inneren Gelenks (22) mit einem Drehgelenk (24) verbunden sind.

7. Sensorlagerung nach einem der vorhergehenden Ansprüche, **dadurch gekennzeichnet, dass** die Positionskontrolle (10) ein Messelement (42) an der Parallelogrammführung (16), insbesondere an der Lenkerstütze (21), und/oder dass die Positionskontrolle (10) ein Messelement (43) am Träger (25), insbesondere am Lager (26) aufweist.

8. Sensorlagerung nach einem der Ansprüche 5 bis 7, **dadurch gekennzeichnet, dass** der Träger (25) mit einer Schlittenführung (27) verbunden ist, und/oder dass der Träger (25) an einem beweglichen Schlitten (28) in einem Gestell (13) angeordnet ist, und/oder dass der Träger (25) über ein Ausgleichselement (33), insbesondere einen drehbaren Kulissenhebel, mit einem Gegengewicht (31) verbunden ist.

9. Sensorlagerung nach Anspruch 8, **dadurch gekennzeichnet, dass** die Positionskontrolle (10) ein Messelement (44) aufweist zur Erfassung der Trägerbewegung im Gestell (13).

10. Sensorlagerung nach einem der Ansprüche 3 bis 9, **dadurch gekennzeichnet, dass** die Positionskontrolle (10) ein oder mehrere Kontrollelemente (40, 41), insbesondere Initiatoren, zur Erfassung einer Ausgangsstellung der Parallelführung (16) und ggf. des Trägers (25) aufweist.

11. Sensorlagerung nach einem der Ansprüche 5 bis 10, **dadurch gekennzeichnet, dass** das Gestell (13) oder der Träger (25) einen Anschluss (14) zur Verbindung mit einer stationären oder instationären Trageinrichtung (45, 71) aufweist, und/oder dass das Gestell (13) als endseitig offenes Gehäuse ausgebildet ist, das den Träger (25) und die Parallelführung (16) umgibt und aus dem endseitig der Sensor (4) ragt.

12. Kalibrierwerkzeug für Schweißwerkzeuge (52), insbesondere elektrische Schweißzangen, mit einem beweglichen Sensor (4), insbesondere einem Kraftsensor, **dadurch gekennzeichnet, dass** das Kalibrierwerkzeug (2) eine nach mehreren Bewegungsachsen ausweichfähige Sensorlagerung (8) für den Sensor (4), insbesondere eine ausweichfähige Sensorlagerung (8) für den Sensor (4) gemäß einem der Ansprüche 1 bis 11 aufweist.

13. Kalibrierwerkzeug nach Anspruch 12, **dadurch gekennzeichnet, dass** das Kalibrierwerkzeug (2) an einem mehrachsig beweglichen Manipulator (45) angeordnet ist und von diesem relativ zu stationären oder instationären Schweißwerkzeugen (52), insbesondere elektrischen Schweißzangen, gehandhabt wird, und/oder dass das Kalibrierwerkzeug (2) an einer stationären Trageinrichtung (71) angeordnet ist.

14. Kalibriereinrichtung für Schweißwerkzeuge (52), insbesondere elektrische Schweißzangen, mit einem Kalibrierwerkzeug (2) mit einem beweglichen Sensor (4), insbesondere einem Kraftsensor, **dadurch gekennzeichnet, dass** das Kalibrierwerkzeug (2) nach Anspruch 12 oder 13 ausgebildet ist.

15. Kalibriereinrichtung nach Anspruch 14, **dadurch gekennzeichnet, dass** der Sensor (4) und eine Positionskontrolle (10), insbesondere eine Messeinrichtung (12) für die Ausweichbewegungen des Sensors (4) mit einer Auswerteeinrichtung (3) verbunden sind, und/oder dass die Kalibriereinrichtung (1) eine Erfassungseinrichtung (67) für die Zangenelastizität aufweist.

16. Kalibriereinrichtung nach Anspruch 15, **dadurch gekennzeichnet, dass** die Erfassungseinrichtung (67) eingerichtet ist, die Elastizitäten der Zangenarme (53, 54) getrennt zu erfassen, und/oder dass die Erfassungseinrichtung (67) eingerichtet ist, eine elastische Ausweichbewegung (b) der Elektroden (61, 62) zu erfassen.

17. Kalibriereinrichtung nach einem der Ansprüche 14 bis 15, **dadurch gekennzeichnet, dass** die Kalibriereinrichtung (1) eine Erfassungseinrichtung (66) für den Elektrodenversatz (a) aufweist, welche insbesondere eingerichtet ist, den vertikalen Abstand (a) zwischen einer Elektrodenspitze (63) am festen Zangenarm (53) und der letzten Handachse (48) einer Manipulatorhand (46) im unbelasteten Zangenzustand zu erfassen.

18. Kalibriereinrichtung nach einem der Ansprüche 14 bis 16, **dadurch gekennzeichnet, dass** die Kalibriereinrichtung (1) eine Erfassungseinrichtung (69) für einen Zangenantrieb (56) aufweist, welche insbesondere eingerichtet ist, die Stellungen des Zangenantriebs (56) bei geschlossener Schweißzange (52) ohne Elektrodenkraft und mit mehreren verschiedenen Kraftniveaus zu erfassen.

19. Kalibriereinrichtung nach einem der Ansprüche 14 bis 17, **dadurch gekennzeichnet, dass** die Kalibriereinrichtung (1) eine Erfassungseinrichtung (68) für eine Kraftmessung an der Schweißzange (52) aufweist, welche insbesondere eingerichtet ist, einen Proportionalitätsfaktor eines Sensors (60) an der Schweißzange (52) zur Ermittlung der Zangenkraft zu erfassen.

20. Kalibriereinrichtung nach einem der Ansprüche 14 bis 18, **dadurch gekennzeichnet, dass** die Kalibriereinrichtung (1) mehrere kombinierte Erfassungseinrichtungen (66-69) aufweist, welche insbesondere bei einer Zangenschließbewegung gemeinsam bedienbar sind.

21. Kalibriereinrichtung nach einem der Ansprüche 14 bis 19, **dadurch gekennzeichnet, dass** die Kalibriereinrichtung (1) einen oder mehrere Speicher (72, 73) für Kalibrierdaten des Kraftsensors (60) und der Messeinrichtung (12) aufweist, und/oder dass die Kalibriereinrichtung (1) eine Auswerteeinrichtung 3 aufweist, die mit der Manipulatorsteuerung 49 verbunden ist.

22. Kalibriereinrichtung nach Anspruch 20, **dadurch gekennzeichnet, dass** die Auswerteeinrichtung (3) mit dem Sensor (60) an der Schweißzange (52) zur Ermittlung der Zangenkraft verbunden ist, und/oder dass die Auswerteeinrichtung (3) in eine Technologiesteuerung (50) und/oder in eine Manipulatorsteuerung (49) integriert ist.
